# NEUE EUROPÄISCHE PATENTSCHRIFT

(11) **EP 1 197 386 B2**
(45) Veröffentlichungstag und Bekanntmachung des Hinweises auf die Entscheidung über den Einspruch: **30.09.2009**
(45) Hinweis auf die Patenterteilung: 04.05.2005
(21) Anmeldenummer: 01116595.8
(22) Anmeldetag: 10.07.2001
(51) Int. Cl.: B60P 1/58, A01D 90/10, A01D 46/00, B60P 1/38

(54) **Traubenauffangbehälter mit kombinierter Austragvorrichtung und Traubentransportfahrzeug**
Grape transporting vehicle with combined discharging device
Véhicule transporteur de raisins comprenant un dispositif de déchargement

(30) Priorität: 14.10.2000 DE 10051045
(43) Veröffentlichungstag der Anmeldung: 17.04.2002
(73) Patentinhaber: BEVERAGE EQUIPMENT LTD., Dublin 12 (IE)
(72) Erfinder:
(74) Vertreter: Steil, Christian

(56) Entgegenhaltungen:
- EP-A- 0 107 100
- EP-A- 0 340 130
- EP-A- 0 881 172
- EP-A- 0 997 342
- EP-A1- 0 634 238
- DE-C1- 807 387
- FR-A- 1 592 507
- FR-A- 2 810 852
- US-A1- 5 469 972

## Beschreibung

Die vorliegende Erfindung betrifft einen Traubenauffangbehälter mit kombinierter Austragvorrichtung, zum Aufnehmen und anschließendem Austragen von Trauben, mit einer sich nach oben öffnenden Einfüllöffnung, über die Trauben in den Traubenauffangbehälter gegeben werden, wenigstens einer Traubenrutsche, von der Trauben in die im Bodenbereich des Traubenauffangbehälters angeordnete Austragvorrichtung rutschen, und einem verschließbaren Traubenauslaß, aus dem die in den Traubenauffangbehälter gegebenen Trauben bei Bedarf mittels der Austragvorrichtung im wesentlichen in horizontaler Richtung ausgetragen werden.

Ferner betrifft die vorliegende Erfindung ein Traubentransportfahrzeug zum Transportieren von gelesenen Trauben zur Kelter, mit einem Fahrgestell und einem an dem Fahrgestell montierten Auffangbehälter mit kombinierter Austragvorrichtung, zum Einfüllen und Sammeln der gelesenen Trauben und zum Übergeben der gelesenen Trauben an einer Traubenannahmestelle.

Ein solcher Traubenauffangbehälter mit kombinierter Austragvorrichtung sowie ein hiermit ausgestattetes Traubentransportfahrzeug sind bspw. bekannt aus Technologie des Weines, Gerhard Troost, 6. Auflage, Stuttgart: Ulmer, 1988 oder auch aus der EP 0 340 130 A1.

Traubenauffangbehälter mit kombinierter Austragvorrichtung werden stationär überwiegend in genossenschaftlich organisierten Weinannahmestellen oder in Großbetrieben verwendet. Sie dienen dort zum Auffangen von angelieferten Trauben und zur Weiterförderung an andere Traubenverarbeitungsmaschinen, insbesondere Abbeermaschinen.

Im mobilen Einsatz als Aufsatz auf einem Fahrgestell eines Traubentransportfahrzeuges finden sich Anwendungen überwiegend in Klein- und Mittelbetrieben, bei denen die Weinlese teilweise von Hand oder mittels spezieller Erntemaschinen erfolgt.

Bei der Weinlese von Hand werden die gelesenen Trauben vom Leser bzw. der Leserin in ein Lesegefäß übernommen und anschließend in ein größeres Zwischengefäß (Logel) oder direkt in einen Traubenauffangbehälter eines Traubentransportfahrzeuges übergeben. Erntemaschinen übergeben die gelesenen Trauben direkt in den Traubenauffangbehälter.

Als Aufsatz auf einem Traubentransportfahrzeug haben solche Traubenauffangbehälter in der Regel eine Kapazität von wenigstens 500 l, in der Regel mehr als 1000 l bis hin zu 2000 l.

Generell können solche Traubenauffangbehälter auch integraler Bestandteil von vollintegrierten Traubenerntemaschinen sein.

Seit einigen Jahren besteht eine unverkennbare Tendenz hin zu Qualitätsweinen. Die Qualität eines Weins hängt dabei nicht nur von den Trauben selbst und der Kelter ab, sondern auch in nicht unerheblichem Maße von der Behandlung der Trauben in dem Zeitraum zwischen Lese und Abbeeren.

Die bekannten Traubenauffangbehälter verwenden zum Traubenaustragen generell Schneckenförderer. Zum Austragen von Trauben aus einem Behälter sind auch Absauganlagen bekannt. Ferner ist es auch bekannt, den Traubenauffangbehälter insgesamt abzukippen und dadurch zu entleeren, oder das Traubentransportfahrzeug insgesamt mittels einer Kippanlage zu kippen und den Traubenauffangbehälter dadurch zu entleeren.

Bei den verschiedenen Verfahren befinden sich die angestrebte Qualität und die Dauer des Entladevorganges häufig in einem Zielkonflikt miteinander. Bei schnellem Austragen (z.B. Entleeren in einer Kippanlage) werden die Trauben stark gequetscht, so daß das Abbeeren anschließend schwierig ist. Langsamere Systeme wie z.B. Schneckenförderer behandeln die Trauben zwar schonender, das Austragen dauert jedoch erheblich länger.

Aus der EP 0 881 172 A1 ist ferner ein Trogförderer bekannt, der mittels eines Vibrators eine Förderbewegung einleitet. Ein Trog ist an Blattfedern mit einer Basis verbunden, der mittels eines linearen Vibrationsantriebs angeregt wird. Dabei sind Maßnahmen getroffen, damit die Basis nicht in Vibration versetzt wird.

Vor diesem Hintergrund ist es die Aufgabe der vorliegenden Erfindung, einen verbesserten Traubenauffangbehälter mit kombinierter Austragvorrichtung sowie ein Traubentransportfahrzeug mit einem solchen Traubenauffangbehälter anzugeben.

Diese Aufgabe wird durch einen Traubenauffangbehälter mit den Merkmalen des Anspruchs 1 gelöst.

Bei dem eingangs genannten Traubentransportfahrzeug wird diese Aufgabe dadurch gelöst, dass ein solcher Traubenauffangbehälter mit kombinierter Austragvorrichtung an dem Fahrgestell montiert wird.

Mit dem Vibrationsförderer können die Trauben zum einen besonders schonend und gleichmäßig ausgetragen werden. Zum anderen können hohe Austragleistungen erzielt werden, im Bereich bis zu 30 Tonnen pro Stunde.

Insofern kann mit den so aufgefangenen und schonend ausgetragenen Trauben ein Wein besonders hoher Qualität hergestellt werden. Zum anderen kann das Austragen besonders schnell erfolgen, so dass ein so ausgestattetes Traubentransportfahrzeug besonders wirtschaftlich arbeitet.

Bei Vibrationsförderern lässt sich die Austragsleistung zudem vergleichsweise einfach variieren.

Die Rutsche dient dazu, bei möglichst großer Einfüllöffnung für eine vollkommene Entleerung des Behälters in die Austragvorrichtung zu sorgen.

Da der Traubenauffangbehälter eine Rutsche aufweist, vorzugsweise zwei gegenüberliegende Rutschen, oder sonstwie trichterartig ausgebildet ist, können eine große Einfüllöffnung und eine hohe Füllkapazität des Auffangbehälters realisiert werden. Zum anderen muß der Vibrationsförderer nicht zum in Vibration Versetzen des gesamten Traubenauffangbehälters ausgelegt sein.

Durch das Vibrieren der Platte können die Trauben bei geringem konstruktivem Aufwand ausgetragen werden.

Die flexiblen Verbindungsmittel haben den Vorteil, dass der Vibrationsförderer lediglich zur Vibration der Rinne ausgelegt sein muss, sich jedoch andererseits gewisse Anteile der Vibrationsbewegung auch auf den Auffangbehälter übertragen und damit ein Abrutschen der Trauben von der Rutsche in den Vibrationsförderer unterstützen.

Dabei ist es bevorzugt, wenn die Platte in Austragrichtung gegenüber der Horizontalen um einen Winkel im Bereich zwischen 0,5° und 5° geneigt ist.

Dieser Winkelbereich unterstützt zum einen den Austragvorgang. Auf der anderen Seite ist der Winkel so gering, dass die Trauben z.B. während eines Transportes nicht aufgrund von Gravitationskraftanteilen gequetscht werden.

Ferner ist es bevorzugt, wenn die Rutsche gegenüber der Horizontalen um einen Winkel im Bereich zwischen 10° und 45°, insbesondere zwischen 10° und 30° geneigt ist.

Es hat sich gezeigt, dass die Trauben bei solchen Winkelbereichen sicher in den Vibrationsförderer rutschen und nicht auf der Rutsche verbleiben.

Dies wird insbesondere gefördert dann, wenn zwischen dem Vibrationsförderer und den Rutschen eine mechanische Kopplung vorhanden ist, so dass gewisse Anteile der Vibrationsbewegung auch auf den Traubenauffangbehälter und damit die Rutsche übertragen werden.

Erfindungsgemäß ist die Platte, auf der die Trauben aufliegen, als Siebplatte ausgebildet, die oberhalb eines Bodens der Rinne angeordnet ist.

Auf diese Weise tropft Traubensaft durch die Siebplatte auf den Boden der Rinne und kann dort ggf. separat über einen eigenen Safthahn abfließen.

Erfindungsgemäß sind die flexiblen Verbindungsmittel als elastische Dichtmittel ausgebildet.

In diesem Fall ist gewährleistet, dass bei einem hohen Saftanteil der Pegel des Traubensaftes über die Rinne hinaus ansteigen kann, ohne dass Saft verloren geht.

Ferner ist es bevorzugt, wenn die Rinne mittels elastischer Federelemente an einem Träger abgestützt ist.

Auf diese Weise kann die Rinne die Bewegungsenergie eines Vibrators der Vibrationsvorrichtung leicht übernehmen. Ferner werden die flexiblen Verbindungsmittel, insbesondere die elastischen Dichtmittel zur Verbindung der Rinne mit dem Auffangbehälter entlastet. Alternativ ist es jedoch auch möglich, dass die Rinne an dem Traubenauffangbehälter abgehängt ist.

Dabei ist es besonders bevorzugt, wenn der Träger starr mit dem Traubenauffangbehälter verbunden ist.

Auf diese Weise können sich Vibrationen auch über die elastischen Federelemente auf den Traubenauffangbehälter übertragen, so dass die Trauben leichter abrutschen, wenn der Vibrationsförderer in Betrieb ist.

Insgesamt ist es bevorzugt, wenn der Vibrator dazu ausgelegt ist, die Rinne insgesamt in Vibration zu versetzen.

Auf diese Weise können hohe Austragleistungen realisiert werden, insbesondere im Vergleich zu Lösungen, bei denen nur eine Platte in Vibration versetzt wird.

Gemäß einer besonders bevorzugten Ausführungsform erteilt der Vibrator der Platte bzw. der Rinne eine Vibrationsbewegung in einer Vibrationsachse, die mit der Auflageebene der Trauben einen Vibrationswinkel einnimmt, der größer ist als Null.

Hierdurch wird erreicht, daß die Trauben bei einer Vorschubbewegung nicht nur in Austragrichtung sondern auch leicht nach oben versetzt werden. Bei der anschließenden Rückbewegung ist folglich die Reibung zwischen Trauben und Oberfläche der Auflageplatte verringert. Die Trauben werden insofern in hohem Maße geschont.

Besonders bevorzugt ist es, wenn der Vibrationswinkel im Bereich zwischen 15° und 50° liegt, insbesondere zwischen 20° und 40°.

Es hat sich gezeigt, daß bei solchen Vibrationswinkeln zum einen hohe Austragleistungen erzielt werden und zum anderen die Trauben besonders schonend transportiert werden.

Gemäß einer weiteren bevorzugten Ausführungsform verläuft die Vibrationsachse durch den Schwerpunkt der Austragvorrichtung.

Auf diese Weise ist es möglich, die Lager zum Lagern der in Vibration zu versetzenden Platte bzw. Rinne gleichmäßig zu belasten.

Auch ist es vorteilhaft, wenn der Vibrator als Elektrovibrator, insbesondere als elektrischer Unwuchtmotor ausgebildet ist.

Diese Arten von Vibratoren weisen einen hohen Wirkungsgrad auf und sind auch für hohe Austragleistungen geeignet. Alternativ hierzu ist jedoch auch der Einsatz eines hydraulisch angetriebenen Vibrators möglich.

Ferner ist es von Vorzug, wenn das erfindungsgemäße Traubentransportfahrzeug mit einer Hubvorrichtung versehen ist, die an dem Fahrgestell festgelegt wird und zum Anheben und Absenken des Transportbehälters mit kombinierter Austragvorrichtung dient.

Auf diese Weise kann die Einlaßöffnung des Traubenauffangbehälters beim Hineingeben der Trauben niedrig liegen, bspw. in einer Höhe von weniger als 2 m.

Durch die Hubvorrichtung läßt sich zum Austragen der Trauben der Traubenauslaß auf eine Höhe von bspw. über 2 m anheben, um die Trauben von oben in eine Nachbearbeitungsmaschine wie eine Abbeermaschine einfüllen zu können.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Traubentransportfahrzeuges von hinten;
- Fig. 2: eine schematische Seitenansicht des Traubentransportfahrzeuges der Fig. 1;
- Fig. 3: eine schematische Seitenansicht des Traubenauffangbehälters mit kombinierter Austragvorrichtung des Transportfahrzeuges der Fig. 1 und 2;
- Fig. 4: eine schematische Ansicht eines Details IV der Fig. 3;
- Fig. 5: eine schematische Draufsicht auf das Traubentransportfahrzeug der Fig. 1 bis 4;
- Fig. 6: eine schematische Ansicht eines Details VI von Fig. 5;
- Fig. 7: eine schematische Schnittansicht entlang einer Linie VII-VII von Fig. 6;
- Fig. 8: eine schematische Darstellung einer Traubenannahmestation mit einer alternativen Ausführungsform eines Traubenauffangbehälters mit kombinierter Austragvorrichtung;
- Fig. 9: eine weitere alternative Ausführungsform eines Traubenauffangbehälters mit kombinierter Austragvorrichtung; und
- Fig. 10: eine schematische Schnittansicht einer weiteren Ausführungsform eines Traubenauffangbehälters mit kombinierter Austragvorrichtung.

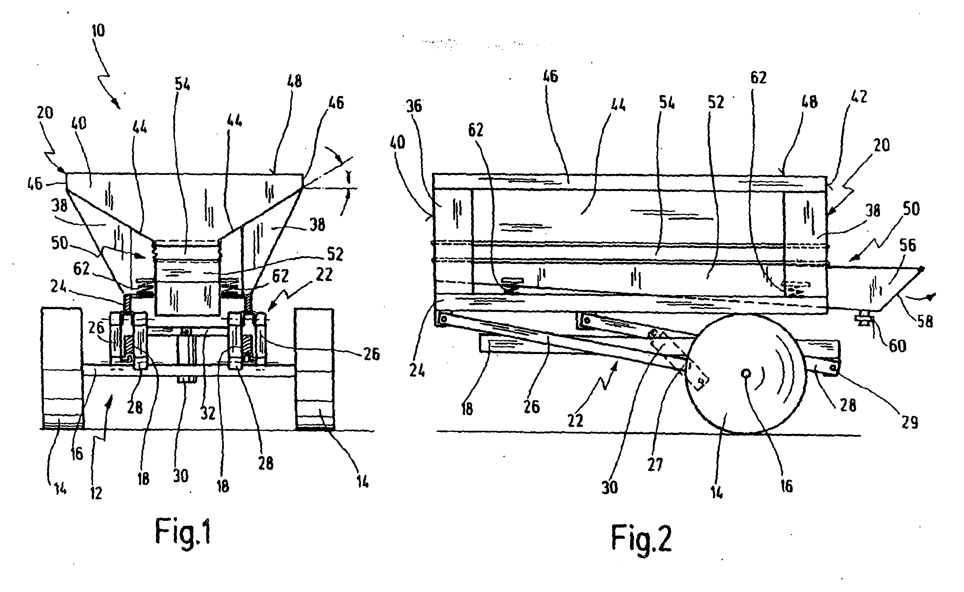

In den Fig. 1 bis 7 ist ein Traubentransportfahrzeug in Form eines einachsigen Hängers generell mit 10 bezeichnet. Ein Traubentransportfahrzeug kann alternativ auch durch einen mehrachsigen Hänger oder als Selbstfahrer ausgebildet sein.

Das Traubentransportfahrzeug 10 weist ein Fahrgestell 12 mit zwei Rädern 14, einer Achse 16 und zwei Längsträgern 18 auf und ist in bezug auf eine vertikale Mittenebene im wesentlichen symmetrisch aufgebaut.

An den Längsträgern 18 ist eine Hubvorrichtung 22 festgelegt, an der ein Traubenauffangbehälter 20 mit kombinierter Austragvorrichtung festgelegt ist.

Die Hubvorrichtung 22 weist zwei obere Längsträger 24 auf, die zu den Längsträgern 18 etwa parallel verlaufen, sowie zwei vordere Verbindungsträger 26 und zwei hintere Verbindungsträger 28.

Die vorderen Verbindungsträger 26 sind an den Längsträgern 18 um eine Schwenkachse 27 verschwenkbar gelagert. Die hinteren Verbindungsträger 28 sind an den Längsträgern 18 um eine Schwenkachse 29 verschwenkbar gelagert.

Ferner sind die Verbindungsträger 26, 28 in entsprechender Weise an den oberen Längsträgern 24 drehbar gelagert.

Die Träger 18, 24, 26, 28 bilden zwei in seitlicher Richtung des Traubentransportfahrzeuges 10 beabstandete Parallelogrammgetriebe.

Die Hubvorrichtung 22 weist ferner eine Hydraulikeinheit 30 auf, die einerseits an dem Fahrgestell 12 und andererseits an einem Querträger 32 angreift, der die hinteren Verbindungsträger 28 miteinander koppelt.

Bei Betätigen der Hydraulikeinheit 30 verschwenken die Verbindungsträger 26, 28 nach oben, so daß die oberen Längsträger 24 zu den unteren Längsträgern 18 parallel nach oben versetzt werden.

Der Traubenauffangbehälter 20 mit kombinierter Austragvorrichtung weist zwei vordere Stützen 36 und zwei hintere Stützen 38 auf, die an den oberen Längsträgern 24 festgelegt sind.

Der Traubenauffangbehälter 20 weist ferner eine Vorderwand 40 und eine Rückwand 42 auf.

Zwischen der Vorderwand 40 und der Rückwand 42 erstrecken sich zwei gegenüberliegende Rutschen 44, die an ihren oberen Kanten in zwei sich nach oben erstreckende Seitenwände 46 übergehen.

Die oberen Kanten der Seitenwände 46 und die oberen Kanten der Vorderwand 40 und der Rückwand 42 bilden eine Einlaßöffnung 48.

Die Einlaßöffnung 48 ist bei eingefahrener Hubvorrichtung 22 auf einer Höhe von etwa 2 m.

Die Länge L der Einlaßöffnung 48 kann etwa 4 m betragen und die Breite B etwa 2 m.

Die zwei Rutschen 44 sind so ausgebildet, daß sie zur mittleren Längsachse des Traubentransportfahrzeuges 10 hin abfallen, und zwar unter einem Winkel γ, der im vorliegenden Fall etwa 30° beträgt.

Zwischen den zwei Rutschen 44 ist eine sich in Längsrichtung erstreckende Austragvorrichtung in Form eines Vibrationsförderers 50 angeordnet.

Die Rutschen 44 bilden gemeinsam eine Art Trichter, der in den Vibrationsförderer 50 mündet.

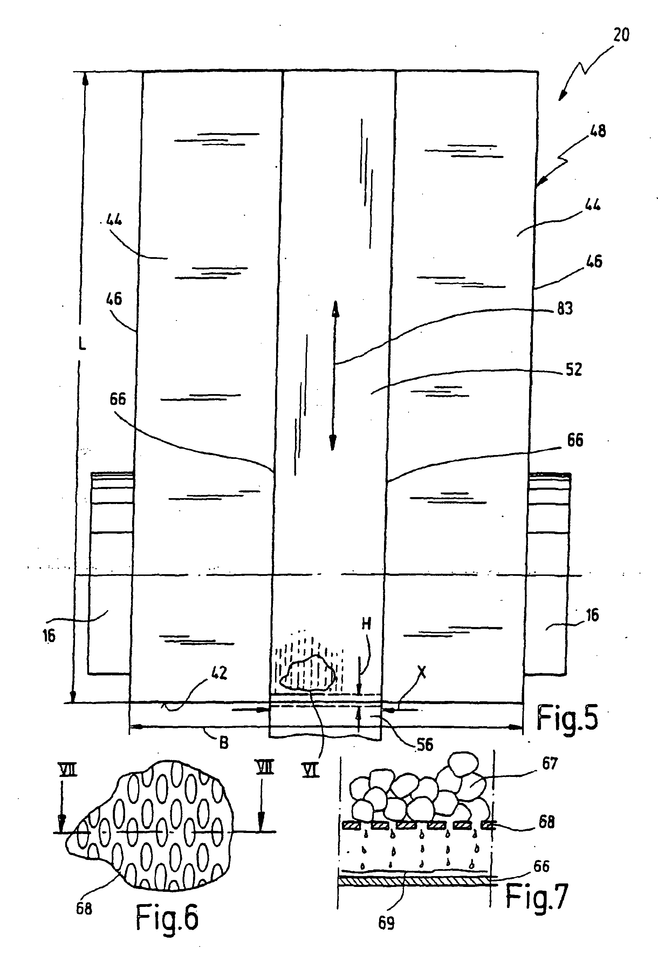

In der Draufsicht der Fig. 5 ist zu erkennen, daß sich die Rutschen 44 als auch die Austragvorrichtung 50 über die ganze Länge L des Traubenauffangbehälters 20 erstrecken.

In der Draufsicht ist jede der Rutschen 44 etwas breiter als die Breite X des Vibrationsförderers 50.

Es versteht sich, daß anstelle von zwei gegenüberliegenden Rutschen auch nur eine Rutsche vorhanden sein könnte, oder daß zusätzlich an der Vorderseite und der Rückseite weitere Rutschen vorgesehen sind. Es ist ferner denkbar, daß die Rutsche als kreisförmiger Trichter ausgebildet ist, der in eine etwa kreisförmige oder quadratische Öffnung mündet, die oberhalb eines Vibrationsförderers angeordnet ist.

Die gezeigte Anordnung mit zwei gegenüberliegenden Rutschen 44 und einer dazwischenliegenden, sich längs erstreckenden Austragvorrichtung 50 ist jedoch ein guter Kompromiß zwischen möglichst schonender Aufnahme von Trauben einerseits und möglichst effizientem Austragen der Trauben andererseits.

Der Vibrationsförderer 50 weist eine Rinne 52 auf, die über eine flexible Umlaufdichtung 54 mit den unteren Kanten oder einem davon vorstehenden Abschnitt des Traubenauffangbehälters 20 verbunden ist.

Durch die flexible Umlaufdichtung 54 wird einerseits erreicht, daß die Rinne 52 relativ zu dem Traubenauffangbehälter 20 beweglich ist. Zum zweiten wird aber auch erreicht, daß der Traubenauffangbehälter 20 einschließlich der Rinne 52 abgedichtet ist. Folglich können auch saftreiche Trauben gelesen und aufgenommen werden, bei denen der Saftanteil im Traubenauffangbehälter 20 so groß ist, daß der Saft das Niveau der Rinne 52 übersteigt und bspw. bis auf eine mittlere Höhe der Rutschen 44 reichen kann.

Alternativ hierzu ist es jedoch theoretisch auch denkbar, die Rinne 52 getrennt von dem Traubenauffangbehälter 20 zu lagern und/oder die Rinne 52 mit nicht dichtenden flexiblen Verbindungsmitteln mit dem Traubenauffangbehälter 20 zu verbinden, bspw. über ein Getriebe. Als nicht vollkommen dichtendes Verbindungsmittel ist auch ein Labyrinth denkbar.

Die Lösung mit der flexiblen bzw. elastischen Umlaufdichtung 54, die vorzugsweise aus Gummi, insbesondere aus einem Gummi mit einer Verstärkungseinlage besteht, ist jedoch als bevorzugt anzusehen.

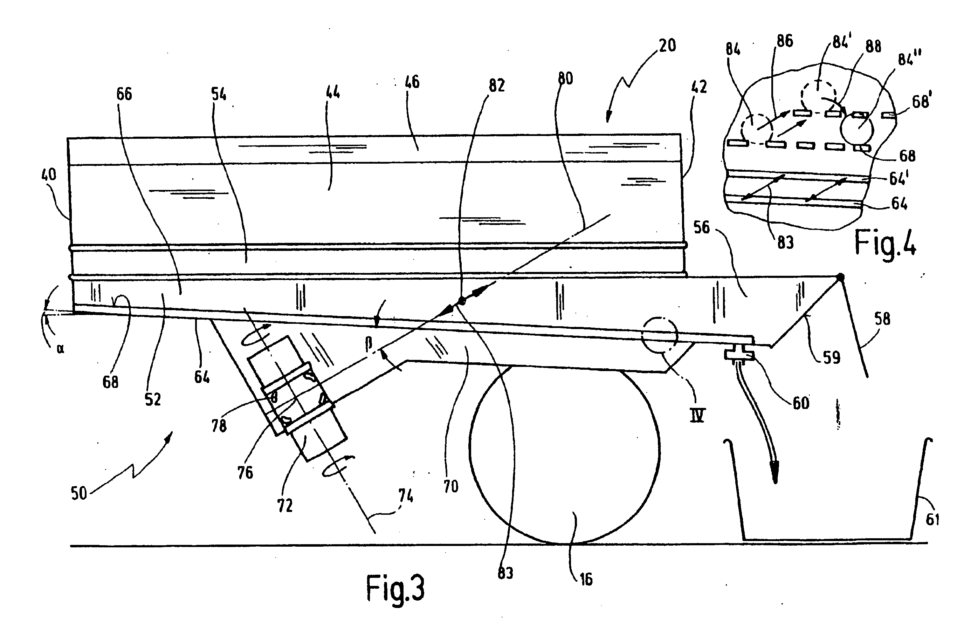

Die Rinne 52 ist gegenüber der Horizontalen in Richtung nach hinten um einen Winkel α geneigt (siehe Fig. 3), der im Bereich zwischen 0,5 und 5° liegen kann. Im vorliegenden Fall beträgt der Winkel α 2,5°.

In Richtung nach hinten steht die Rinne 52 gegenüber der Rückwand 42 vor und ist in dem vorstehenden Abschnitt nach oben geschlossen, so daß ein Austragkasten 56 gebildet ist.

An dem Austragkasten 56 ist eine verschwenkbare Klappe 58 gelagert. Die Klappe 58 dient zum Öffnen und dichtenden Verschließen eines Traubenauslasses 59, in den der Austragkasten 56 mündet.

An der Unterseite des Austragkastens 56 ist ein absperrbarer Hahn 60 vorgesehen, der dazu dient, in dem Traubenauffangbehälter 20 aufgestauten Traubensaft abzulassen, bspw. in einen separaten Trog 61. Anstelle eines separaten Troges 61 kann an der Unterseite des Austragkastens 56 auch ein mitführbarer Saftauffangbehälter festlegbar sein.

Die Rinne 52 ist, wie bereits erwähnt, mit dem Traubenauffangbehälter 20 über die flexible Umlaufdichtung 54 verbunden.

Um zu vermeiden, daß die flexible Umlaufdichtung 54 aufgrund des Eigengewichtes der in den Traubenauffangbehälter 20 und in die Rinne 52 eingefüllten Trauben zu stark belastet wird, ist die Rinne 52 zusätzlich durch vier Schraubenfedern 62 gelagert, die sich an den oberen Längsträgern 24 abstützen.

Es könnte bei einer geeigneten Materialwahl für die Umlaufdichtung 54 auf die Federn 62 verzichtet werden. Im vorliegenden Fall wird es jedoch als günstig erachtet, die Federn 62 vorzusehen, und dann das Material der flexiblen Umlaufdichtung 54 elastischer und damit auch weniger empfindlich gegenüber Materialermüdung auszubilden.

Die Rinne 52 weist, wie es insbesondere in den Fig. 3 bis 7 zu sehen ist, einen Boden 64 und zwei hochstehende Seitenwände 66 auf.

In einem Abstand von einigen Zentimetern oberhalb des Bodens 64 ist ein Siebblech 68 vorgesehen, das Öffnungen aufweist, die generell etwas kleiner sind als die Größe von einzelnen Trauben 67.

Traubensaft tropft über die Öffnungen in dem Siebblech 68 nach unten auf den Boden 64 der Rinne 52 und fließt aufgrund der Neigung der Rinne 52 hin zu dem Hahn 60. Es versteht sich, daß der Boden 64 der Rinne 52 im Bereich des Austragkastens 56 so geformt sein kann, daß eine Art Trichter hin zu dem Hahn 60 gebildet wird, um zu vermeiden, daß Saft bei geöffneter Klappe 58 über den Traubenauslaß 59 austritt.

An der Rinne 52 ist ein generell mit 70 bezeichneter Rahmen festgelegt, an dem zwei elektrische Unwuchtmotoren 72 befestigt sind. Es können alternativ auch ein oder mehr als zwei Unwuchtmotoren vorgesehen sein. Ferner sind anstelle der elektrischen Unwuchtmotoren 72 auch hydraulische oder elektromagnetisch angetriebene Vibratoren verwendbar.

Die zwei Unwuchtmotoren 72 weisen jeweils eine Drehachse 74 auf, die etwa parallel verläuft zu einer vertikalen Längsebene. Sie sind an dem Rahmen 70 so festgelegt, daß sie durch Einstellmittel 78 in einem begrenzten Umfang um einen Drehpunkt 76 verstellt werden können.

Durch die Unwucht erteilen die Unwuchtmotoren 72 dem Rahmen 70 eine Vibrationsbewegung 83, die entlang einer Wirklinie 80 verläuft. Die Wirklinie verläuft in Austragrichtung nach schräg oben.

Mittels der Einstellmittel 78 wird die Lage der Unwuchtmotoren 72 in bezug auf den Rahmen 70 und damit in bezug auf die Rinne 52 so eingestellt, daß die resultierende Wirklinie 80 des oder der Elektromotoren 72 durch den Schwerpunkt 82 der in Vibration zu versetzenden Teile des Vibrationsförderers 50 verläuft.

Auf diese Weise kann erreicht werden, daß im wesentlichen keine Kippmomente erzeugt werden, die dazu führen könnten, daß die flexible Umlaufdichtung 54 einseitig belastet wird. Vielmehr wird durch die spezielle Anordnung der Unwuchtmotoren 72 erreicht, daß die Rinne 52 in bezug auf den Traubenauffangbehälter 20 bei der Vibration parallel versetzt wird.

Die Wirklinie 80 nimmt dabei in bezug auf die Ebene des Bodens 64 der Rinne 52 einen Winkel β ein, der generell im Bereich zwischen 15° und 50° liegen kann und im vorliegenden Fall etwa 33° beträgt.

Der Einfluß der Vibrationsbewegung 83 auf Trauben, die auf dem Siebblech 68 aufliegen, soll im vorliegenden kurz anhand der Fig. 4 erläutert werden.

Durch die Vibrationsbewegung 83 wird die Rinne 52 zunächst nach schräg oben in Richtung zum Traubenauslaß 59 und anschließend in gleicher Richtung wieder zurückbewegt, wie es durch die Pfeile 83 angedeutet ist. Dabei erfährt eine auf dem Siebblech 68 aufliegende Traube 84 zunächst eine Beschleunigung entlang eines parallel zur Vibrationsbewegung 83 liegenden Vektors 86. Am oberen Totpunkt der Vibrationsbewegung hat die Traube folglich eine gewisse Strecke in Richtung hin zum Traubenauslaß 59 und einen gewissen Weg nach oben zurückgelegt, was bei 84' gezeigt ist.

In der Folge ist die Bewegung der Rinne 52 umgekehrt. Da die Rückbewegung im Idealfall mit einer höheren Beschleunigung als die Erdbeschleunigung erfolgt, verliert die Traube 84' den Kontakt zu dem Siebblech 68 und folgt einer ballistischen Flugbahn 88, bis sie wieder auf dem Siebblech 68 auftrifft.

Diese Position ist bei 84'' gezeigt.

Ob der Transport der Trauben auf dem Siebblech 68 in Richtung hin zum Traubenauslaß 59 auf diese ideale Weise erfolgt oder nicht, kann dahinstehen, denn entscheidend ist, daß aufgrund des Winkels β von mehr als 0° die Reibung zwischen dem Siebblech 68 und den daraufliegenden Trauben 84 bzw. 67 bei der Umkehrbewegung zumindest stark minimiert wird. Folglich werden die Trauben in hohem Maße geschont.

Der Hub H des Vibrationsförderers 50 kann in der Projektion der Fig. 5 im Bereich von einigen Millimetern bis hin zu einigen Zentimetern liegen.

Im Betrieb wird das Traubentransportfahrzeug 10 zur Lese in den Weinberg gefahren. Dort wird es entweder von Hand oder mittels einer automatischen Erntevorrichtung mit Trauben befüllt, die über die Einlaßöffnung 48 in den Traubenauffangbehälter 20 gegeben werden.

Aufgrund der flexiblen Umlaufdichtung 54 und der dichtenden Wirkung der Klappe 58 verbleibt auch aus den Trauben austretender Saft in dem Traubenauffangbehälter 20 und kann sich sogar bis auf ein Niveau oberhalb der flexiblen Umlaufdichtung 54 aufstauen.

Dabei kann die flexible Umlaufdichtung 54 nach außen "ausgebeult" werden. Aufgrund der Federn 62 wird das Gewicht der eingefüllten und auch auf die Rinne 52 wirkenden Trauben jedoch zu einem Großteil aufgefangen, so daß die Umlaufdichtung 54 nicht übermäßig nach unten hin gedehnt wird.

Bei vollständig gefülltem Traubenauffangbehälter 20, in einer Menge von 2000 oder 3000 1 oder sogar mehr, erfolgt der Transport zu einer Traubenannahmestelle.

Die Traubenannahmestelle kann eine genossenschaftlich organisierte Traubenannahmestelle sein, ist jedoch üblicherweise ein Weingut, wo die Trauben zunächst in eine Abbeermaschine übergeben werden.

Aufgrund der Höhe der Einfüllöffnung einer auf den Boden stehenden Abbeermaschine wird der Traubenauffangbehälter 20 mittels der Hubvorrichtung 22 nach oben angehoben, so, daß der Traubenauslaß 59 oberhalb eines Einlasses der Abbeermaschine (nicht gezeigt) liegt.

Anschließend wird häufig zunächst der in dem Traubenauffangbehälter 20 aufgestaute Saft mittels des Hahns 60 abgelassen. Der Saft kann entweder getrennt in einem Trog 61 aufgefangen werden oder anschließend wieder mit den Trauben zur Bildung der Maische vermischt werden.

Anschließend wird der Vibrationsförderer 50 eingeschaltet. Die Unwuchtmotoren 72 bewirken eine Vibration der Rinne 52, so daß die in der Rinne 52 liegenden Trauben schonend und sehr gleichmäßig, aber mit einer hohen, vorzugsweise regelbaren Austragleistung von bspw. 8 bis 30 Tonnen pro Stunde über den Traubenauslaß 59 ausgetragen werden.

Obgleich die Unwuchtmotoren 72 von der Leistung her nur dazu ausgelegt sind, die Rinne 52 in Vibration zu versetzen, überträgt sich doch über die flexible Umlaufdichtung 54 bzw. die Federn 62 ein gewisser Anteil der Vibrationsbewegung auch auf den Traubenauffangbehälter 20. Folglich wird ein Abrutschen der Trauben von den Rutschen 44 in die Rinne 52 unterstützt.

Anschließend wird die Klappe 58 wieder geschlossen und das Traubentransportfahrzeug fährt erneut in den Weinberg.

Es versteht sich, daß der Traubenauffangbehälter 20 mit kombinierter Austragvorrichtung 50 nicht nur auf einem als Hänger ausgebildeten Traubentransportfahrzeug montiert werden kann, sondern auch auf einem Selbstfahrtraktor, -schlepper oder dgl.

Obgleich die Verwendung des Traubenauffangbehälters 20 mit kombinierter Austragvorrichtung 50 für ein Traubentransportfahrzeug als bevorzugt angesehen wird, so kann der Traubenauffangbehälter 20 mit kombinierter Austragvorrichtung 50 doch auch stationär verwendet werden.

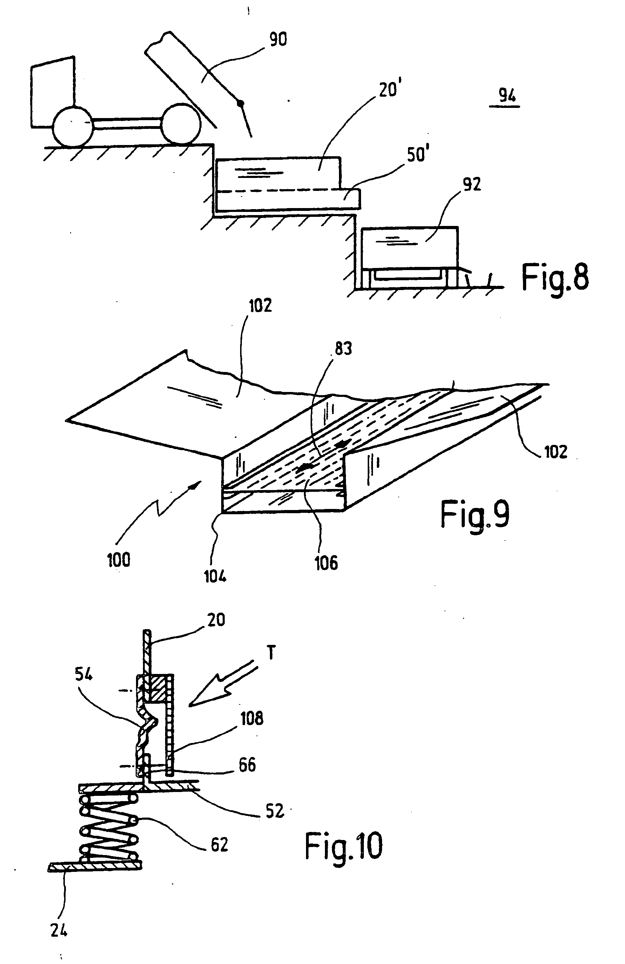

Dies ist schematisch in Fig. 8 gezeigt. Dabei ist ein stationärer Traubenauffangbehälter 20' mit kombinierter Austragvorrichtung 50' in einer Grube einer Traubenannahmestelle 94 angeordnet. Der Traubenauffangbehälter 20' mit der kombinierten Austragvorrichtung 50' kann identisch ausgebildet sein wie der Traubenauffangbehälter 20 mit kombinierter Austragvorrichtung 50 der Fig. 1 bis 7. Der Traubenauffangbehälter 20 wird von oben befüllt, wie es schematisch durch einen Kipper 90 angedeutet ist. Der Austrag über den Traubenauslaß erfolgt in eine unterhalb angeordnete Abbeermaschine 92.

In Fig. 9 ist eine alternative Ausführungsform einer Austragvorrichtung in Form eines Vibrationsförderers 100 dargestellt.

Bei dieser Ausführungsform weist der Traubenauffangbehälter seitliche Rutschen 102 auf, die in eine einstückig hiermit ausgebildete Rinne 104 übergehen, die ähnlich ausgebildet ist wie die Rinne 52. Es ist jedoch keine dazwischen angeordnete Umlaufdichtung 54 vorgesehen. Vielmehr bildet die Rinne 104 einen Teil des Traubenauffangbehälters 20.

An der Rinne 104 ist ein Siebblech 106 in Längsrichtung verschieblich gelagert. Durch einen nicht näher dargestellten vibrator kann dem Siebblech 106 eine Vibrationsbewegung 83 vermittelt werden, die im vorliegenden Fall etwa parallel zur Ebene des Siebbleches 106 verläuft.

Dabei kann bspw. ein Schwert von oben oder durch einen abgedichteten Schlitz in der Rinne 104 von unten an dem Siebblech 106 angreifen, um dem Siebblech 106 die Vibrationsbewegung zu erteilen.

Es versteht sich, daß der Vibrationsförderer 100 die Trauben nicht so schonend transportiert wie der Vibrationsförderer 50 der Ausführungsform der Fig. 1 bis 7. Dennoch erfolgt der Austrag der Trauben schonender als bei herkömmlichen Schraubenförderern und mit einer höheren Leistung.

Schließlich ist in Fig. 10 eine abgewandelte Ausführungsform des Vibrationsförderers 50 gezeigt, bei der im Unterschied zu dem Vibrationsförderer 50 der Fig. 1 bis 7 an dem Traubenauffangbehälter 20 ein Schutzblech 58 montiert ist. Das Schutzblech 108 ist an der Innenseite der Rinne 52 vor der flexiblen Umlaufdichtung 54 angeordnet. Das Schutzblech 108 dient dazu, den von den Trauben ausgeübten Druck T aufzunehmen, derart, daß die flexible Umlaufdichtung 54 nicht übermäßig nach außen gedehnt wird.

## Patentansprüche

1. Traubenauffangbehälter (20) mit kombinierter Austragvorrichtung (50; 100), zum Aufnehmen und anschließendem Austragen von Trauben (67), mit einer sich nach oben öffnenden Einfüllöffnung (48), über die Trauben (67) in den Traubenauffangbehälter (20) gegeben werden, wenigstens einer Traubenrutsche (44), von der Trauben (67) in die im Bodenbereich des Traubenauffangbehälters (20) angeordnete Austragvorrichtung (50; 100) rutschen, und einem verschließbaren Traubenauslass (59), aus dem die in den Traubenauffangbehälter (20) gegebenen Trauben (67) bei Bedarf mittels der Austragvorrichtung (50; 100) im Wesentlichen in horizontaler Richtung ausgetragen werden, wobei die Austragvorrichtung (50; 100) als Vibrationsförderer (50; 100) ausgebildet ist, wobei der Vibrationsförderer (50; 100) eine Platte (68; 106) aufweist, auf die die Trauben (67) von der Rutsche (44) rutschen, wobei wenigstens die Platte (68; 106), auf der die Trauben (67) aufliegen, mittels eines Vibrators (72) in Vibration versetzbar ist, wobei der Vibrationsförderer (50; 100) eine quer zur Rutschrichtung verlaufende Rinne (52; 104) aufweist, wobei die Rinne (52) über flexible Verbindungsmittel (54) mit dem Auffangbehälter (20) verbunden ist, und wobei die Platte (68; 106) als Siebplatte (68; 106) ausgebildet ist,
**dadurch gekennzeichnet, dass**
die Siebplatte (68; 106) oberhalb eines Bodens (64) der Rinne (52; 104) angeordnet ist und dass die flexiblen Verbindungsmittel (54) als elastische Dichtmittel (54) ausgebildet sind, so dass der Pegel von aus den Trauben ausgetretenem Traubensaft über die Rinne (52) ansteigen kann, ohne dass Traubensaft verloren geht.

2. Traubenauffangbehälter nach Anspruch 1, **dadurch gekennzeichnet, dass** die Platte (68; 106) in Austragrichtung gegenüber der Horizontalen um einen Winkel (α) im Bereich zwischen 0,5° und 5° geneigt ist.

3. Traubenauffangbehälter nach Anspruch 1 oder 2, **dadurch gekennzeichnet, dass** die Rutsche (44) gegenüber der Horizontalen um einen Winkel (γ) im Bereich zwischen 10° und 45°, insbesondere zwischen 10° und 30° geneigt ist.

4. Traubenauffangbehälter nach einem der Ansprüche 1 bis 3, **dadurch gekennzeichnet, dass** die Rinne (52) mittels elastischer Federelemente (62) an einem Träger (24) abgestützt ist.

5. Traubenauffangbehälter nach Anspruch 4, **dadurch gekennzeichnet, dass** der Träger (24) starr mit dem Traubenauffangbehälter (20) verbunden ist.

6. Traubenauffangbehälter nach einem der Ansprüche 1 bis 5, **dadurch gekennzeichnet, dass** der Vibrator (72) dazu ausgelegt ist, die Rinne (52) insgesamt in Vibration zu versetzen.

7. Traubenauffangbehälter nach einem der Ansprüche 1 bis 6, **dadurch gekennzeichnet, dass** der Vibrator (72) der Platte (106) bzw. der Rinne (52) eine Vibrationsbewegung (83) in einer Vibrationsachse (80) erteilt, die mit der Auflageebene (68; 106) der Trauben (67) einen Vibrationswinkel (β) einnimmt, der größer ist als Null.

8. Traubenauffangbehälter nach Anspruch 7, **dadurch gekennzeichnet, dass** der Vibrationswinkel (β) im Bereich zwischen 15° und 50° liegt, insbesondere zwischen 20° und 40°.

9. Traubenauffangbehälter nach Anspruch 7 oder 8, **dadurch gekennzeichnet, dass** die Vibrationsachse (80) durch den Schwerpunkt (82) der Austragvorrichtung (50; 100) verläuft.

10. Traubenauffangbehälter nach einem der Ansprüche 1 bis 9, **dadurch gekennzeichnet, dass** der Vibrator (72) als Elektrovibrator (72), insbesondere als elektrischer Unwuchtmotor (72) ausgebildet ist.

11. Traubentransportfahrzeug (10) zum Transportieren von gelesenen Trauben (67) zur Kelter, mit einem Fahrgestell (12) und einem an dem Fahrgestell (12) montierten Traubenauffangbehälter (20) mit kombinierter Austragvorrichtung (50; 100), zum Einfüllen und Sammeln der gelesenen Trauben (67) und zum Übergeben der gelesenen Trauben (67) an einer Traubenannahmestelle,
**dadurch gekennzeichnet, dass**
der Traubenauffangbehälter (20) ein Traubenauffangbehälter nach einem der Ansprüche 1-10 ist.

12. Traubentransportfahrzeug nach Anspruch 11, **dadurch gekennzeichnet, dass** an dem Fahrgestell (12) eine Hubvorrichtung (22) zum Anheben und Absenken des Traubenauffangbehälters (20) mit kombinierter Austragvorrichtung (50; 100) festgelegt ist.

## Claims

1. Collection container (20) for grapes with combined delivery device (50; 100), for receiving and subsequently delivering grapes (67), comprising a fill opening (48) that opens in an upward direction, wherein the grapes (67) can be placed into the collection container (20) via the fill opening, at least one grape chute (44) on which grapes (67) slide into the delivery device (50; 100) arranged at the bottom region of the collection container (20), and a closable grape outlet (59) from which the grapes (67) that have been placed into the collection container (20) are delivered on demand by means of the delivery device (50; 100), in essentially horizontal direction, wherein the delivery device (50; 100) is formed as a vibration conveyor (50; 100), wherein the vibration conveyor (50; 100) comprises a plate (68; 106) onto which the grapes (67) slide from the chute (44), wherein at least the plate (68; 106) on which the grapes (67) are placed, can be set into vibration by means of a vibrator (72), wherein the vibration conveyor (50; 100) comprises a canal (52; 104) arranged transverse with respect to the slide direction, wherein the canal (52) is connected with the collection container (20) via flexible connection means (54), and wherein the plate (68; 106) is formed as sieve plate (68; 106),
**characterized in that**
the sieve plate (68; 106) is arranged above a bottom (64) of the canal (52; 104), and **in that** the flexible connection means (54) are formed as elastic sealing means (54), so that the level of grape juice leaked from the grapes can rise above the canal (52) without grape juice becoming lost.

2. Collection container for grapes according to claim 1, **characterized in that** the plate (68; 106) is inclined in delivery direction against the horizontal by an angle (α) in the range between 0,5° and 5°.

3. Collection container for grapes according to claim 1 or 2, **characterized in that** the chute (44) is inclined against the horizontal by an angle (γ) in the range between 10° and 45°, particularly between 10° and 30°.

4. Collection container for grapes according to any of claims 1 to 3, **characterized in that** the canal (52) is supported at a support (24) by means of elastic spring elements (62).

5. Collection container for grapes according to claim 4, **characterized in that** the support (24) is connected rigidly with the collection container (20).

6. Collection container for grapes according to any of claims 1 to 5, **characterized in that** the vibrator (72) is adapted to set into vibration the entire canal (52).

7. Collection container for grapes according to any of claims 1 to 6, **characterized in that** the vibrator (72) sets the plate (106) and the canal (52), respectively, into a vibration movement (83) along a vibration axis (80) that encompasses a vibration angle (β) with the support plane (68; 106) of the grapes (67), which is greater than zero.

8. Collection container for grapes according to claim 7, **characterized in that** the vibration angle (β) is in the range between 15° and 50°, particularly between 20° and 40°.

9. Collection container for grapes according to claim 7 or 8, **characterized in that** the vibration axis (80) is directed through the center (82) of gravity of the delivery device (50; 100).

10. Collection container for grapes according to any of claims 1 to 9, **characterized in that** the vibrator (72) is formed as an electro vibrator (72), particularly as an electrical unbalance motor (72).

11. Transport vehicle (10) for grapes, for transporting harvested grapes (67) to a press, comprising a chassis (12) and a collection container (20) for grapes with combined delivery device (50; 100) mounted at the chassis (12), for introducing and collecting of harvested grapes (67) and for transferring the harvested grapes (67) to a grape receiving station,
**characterized in that**
the collection container (20) is a collection container (20) for grapes in accordance with any of claims 1 to 10.

12. Transport vehicle for grapes according to claim 11, **characterized in that** a lifting device (22) for lifting and lowering the collection container (20) for grapes with combined delivery device (50; 100) is fixedly arranged at the chassis (12).

## Revendications

1. Conquet de réception de la vendange (20) avec un dispositif de déversement (50 ; 100) combiné, destiné à recevoir et à déverser ensuite la vendange (67), comportant une ouverture d'admission (48) par laquelle la vendange (67) est chargée dans le conquet de réception (20), au moins une trémie (44), par laquelle la vendange (67) glisse dans le dispositif de déversement (50 ; 100) disposé dans la zone du fond du conquet de réception (20), et une ouverture de sortie (59) pouvant être fermée, à travers laquelle la vendange (67) chargée dans le conquet de réception (20) peut, en cas de besoin, être déversée sensiblement dans la direction horizontale au moyen du dispositif de déversement (50 ; 100), le dispositif de déversement (50 ; 100) étant réalisé sous forme de convoyeur vibrant (50 ; 100), le convoyeur vibrant (50 ; 100) comportant une plaque (68 ; 106) sur laquelle la vendange (67) glisse en sortant de la trémie (44), au moins la plaque (68 ; 106), sur laquelle est disposée la vendange (67), étant soumise à des vibrations au moyen d'un vibrateur (72), le convoyeur vibrant (50 ; 100) comportant une goulotte (52 ; 104), orientée transversalement au sens de glissement, la goulotte (52) étant reliée au conquet de réception (20) par des moyens d'assemblage flexibles (54), et la plaque (68 ; 106) étant réalisée sous forme de plaque d'égouttage (68 ; 106),
**caractérisé en ce que**
la plaque d'égouttage (68 ; 106) est disposée au-dessus d'un fond (64) de la goulotte (52 ; 104), et **en ce que** les moyens d'assemblage flexibles (54) sont réalisés sous forme de moyens d'étanchéité élastiques (54), afin que le niveau du jus de raisin qui sort de la vendange puisse monter au-dessus de la goulotte (52) sans perdre du jus de raisin.

2. Conquet de réception selon la revendication 1, **caractérisé en ce que** la plaque (68 ; 106) est inclinée dans la direction de déversement par rapport à l'horizontale en formant un angle (α) dans la plage entre 0,5° et 5°.

3. Conquet de réception selon la revendication 1 ou 2, **caractérisé en ce que** la trémie (44) est inclinée par rapport à l'horizontale en formant un angle (γ) dans la plage entre 10° et 45°, en particulier entre 10° et 30°.

4. Conquet de réception selon l'une des revendications 1 à 3, **caractérisé en ce que** la goulotte (52) est en appui sur un bâti (24) au moyen d'éléments à ressort élastiques (62).

5. Conquet de réception selon la revendication 4, **caractérisé en ce que** le bâti (24) est relié de manière rigide avec le conquet de réception (20).

6. Conquet de réception selon l'une des revendications 1 à 5, **caractérisé en ce que** le vibrateur (72) est conçu pour soumettre la totalité de la goulotte (52) à des vibrations.

7. Conquet de réception selon l'une des revendications 1 à 6, **caractérisé en ce que** le vibrateur (72) imprime à la plaque (106) ou à la goulotte (52) un mouvement de vibration (83) dans un axe de vibration (80) qui forme avec le plan de réception (68 ; 106) de la vendange (67) un angle de vibration (β) supérieur à zéro.

8. Conquet de réception selon la revendication 7, **caractérisé en ce que** l'angle de vibration (β) se situe dans la plage entre 15° et 50°, en particulier entre 20° et 40°.

9. Conquet de réception selon la revendication 7 ou 8, **caractérisé en ce que** l'axe de vibration (80) passe par le centre de gravité (82) du dispositif de déversement (50 ; 100).

10. Conquet de réception selon l'une des revendications 1 à 9, **caractérisé en ce que** le vibrateur (72) est un vibrateur électrique (72), en particulier un moteur électrique à balourd (72).

11. Véhicule de transport de la vendange (10) destiné à transporter la vendange (67) vers le pressoir, comportant un châssis de roulement (12) et un conquet de réception (20) combiné à un dispositif de déversement (50 ; 100), monté sur le châssis de roulement (12) et destiné à recevoir et collecter la vendange (67) et à transférer la vendange (67) vers un lieu de réception de la vendange,
**caractérisé en ce que**
le conquet de réception (20) est un conquet de réception selon l'une des revendications 1 à 10.

12. Véhicule de transport de la vendange selon la revendication 11, **caractérisé en ce qu'**un dispositif élévateur (22), destiné à monter et descendre le conquet de réception (20) avec le dispositif de déversement (50 ; 100) combiné, est fixé sur le châssis de roulement (12).
